# EUROPEAN PATENT APPLICATION

(11) **EP 4 276 065 A1**
(43) Date of publication of application: **15.11.2023**
(21) Application number: 22736613.5
(22) Date of filing: 10.01.2022
(51) Int. Cl.: C01B 32/348, C01B 32/33, C01B 32/39

(54) **PETROLEUM COKE TREATMENT APPARATUS, PROCESS, AND TREATMENT SYSTEM**

(30) Priority: 11.01.2021 CN 202110029311; 11.01.2021 CN 202110029256
(71) Applicant: China Petroleum & Chemical Corporation, Beijing 100728 (CN); Sinopec Dalian Research Institute of Petroleum and Petrochemicals Co., Ltd., Lushunkou District Dalian, Liaoning 116045 (CN)
(72) Inventor: ZHANG, Shudong, Dalian, Liaoning 116045 (CN); ZHANG, Changan, Dalian, Liaoning 116045 (CN); SONG, Yongyi, Dalian, Liaoning 116045 (CN); LIU, Jihua, Dalian, Liaoning 116045 (CN); FANG, Xiangchen, Dalian, Liaoning 116045 (CN); MA, Rui, Dalian, Liaoning 116045 (CN); CAI, Haile, Dalian, Liaoning 116045 (CN); ZHAO, Liping, Dalian, Liaoning 116045 (CN); LIAO, Changjian, Dalian, Liaoning 116045 (CN); MENG, Fanfei, Dalian, Liaoning 116045 (CN); WANG, Haibo, Dalian, Liaoning 116045 (CN); ZHANG, Qingjun, Dalian, Liaoning 116045 (CN); WANG, Chao, Dalian, Liaoning 116045 (CN)
(74) Representative: Hoffmann Eitle
(86) International application number: PCT/CN2022/070885
(87) International publication number: WO 2022/148452

(57) **Abstract**

The present disclosure relates to an apparatus, a process and a system for treating petroleum coke. The apparatus comprises an activation unit which is an annular furnace reactor. The system comprises a first reactor, the apparatus as a second reactor, a washing and separating unit, a cooling unit, a dissolving and separating unit, a washing and drying unit, optionally a regenerating unit, optionally a drying and calcining unit and optionally an evaporation-crystallization unit. Also provided is a process for producing carbon materials by using the system for treating petroleum coke. The apparatus, the process and the system in accordance with the present disclosure can achieve continuous production, and have advantages of high activation efficiency and stable properties of the resultant carbon material products.

## Description

### Technical field

The present disclosure relates to an apparatus, a process and a system for treating petroleum coke, in particular to an apparatus, a process and a system for preparing porous carbon materials by using petroleum coke as raw materials.

### Background

Petroleum coke is a product of delayed coking unit. It has properties such as high calorific value, high moisture, low volatiles, and the like. It is obtained in a yield of about 25% - 30% of the feedstock oils added to the coking unit. Along with the further development of delayed coking technology, how to effectively utilize petroleum coke and improve its added value are difficulties facing the industry at present. Use of petroleum coke as raw materials for preparing porous carbon materials is one of the effective ways to increase the value of petroleum coke in recent years.

Porous carbon materials derived from petroleum coke have properties such as low impurity content, high specific surface area, stable physical and chemical properties, and the like. They are widely used in fields such as industry, agriculture, national defense, science and technology, and the like. Compared with raw materials such as biomass, coal, asphalt and the like, petroleum coke is graphitized to a higher degree and thereby relatively difficult to be activated. The activation of petroleum coke generally requires alkali metal hydroxide such as potassium hydroxide and the like as an activator. During the activation, there are problems such as serious corrosions of equipment, unstable properties of products, and the like.

US4082694A discloses an activated carbon and a process for preparing the same. The process comprises: stirring and heating a feed of pulverized coal, coal coke, petroleum coke or mixture thereof in the presence of a considerable weight ratio of aqueous potassium hydroxide at a first and lower temperature to dehydrate the feed; activating the dehydrated feed by heating to a second and higher temperature; then cooling and removing inorganic materials therefrom by washing, to form activated carbon with higher specific surface area. The prepared activated carbon has a cage-like structure, microporosity, and good bulk density and total organic carbon index. For example, the process for preparing may comprise the steps of: mixing petroleum coke with potassium hydroxide at three times by weight, dehydrating at a temperature of 300-500 °C , activating at a temperature of 700-800 °C, and subjecting the activated mixture to washing by water, to produce activated carbon with a specific surface area of 2600m²/g.

JP95-215711 discloses a method for activating petroleum coke with potassium hydroxide at three times by weight at 800 °C and a reduced pressure to produce activated carbon with a specific surface area of 3000m²/g or greater, wherein a tunnel kiln activation furnace is used.

CN1304788A prepares an activated carbon with a specific surface area of 3500 m^{2/} g or greater by mixing KOH and petroleum coke at a weight ratio of 5:1, and activating at high temperature.

At present, the prior art processes for activating petroleum coke adopt relatively high ratio of the base to the petroleum coke, which may result in serious corrosion of the activation equipment. In general, rotary kilns or tunnel kilns are used as the devices for activating petroleum coke with a base. When a rotary kiln is used in high-temperature activation, due to the physical state of the materials therein changing with temperature, some of the materials may be liquefied and adhere to the wall of the rotary kiln reactor during the rotation, forming a dense material layer that may adversely affect heat transfer and cause uneven heating of the materials, thereby affecting the activation and leading to unstable properties of products. When a tunnel kiln is used, the feed is transported on a conveyor belt. It is activated at high temperature while passing through the tunnel kiln. Tunnel kilns usually use long flexible conveyor belts and support structures. Under high temperature and alkali conditions during the activation, the conveyor belt and its support structure easily suffer from structural collapsing and corrosion, leading to abnormal operation of the activation equipment. Although the industrial production of activated carbon from petroleum coke has been realized now, there are still problems such as high cost for activators and unstable properties of products. Therefore, there is still a demand for further developing processes, apparatuses and systems for preparing porous carbon materials from petroleum coke.

### Summary of the invention

The present disclosure is to provide a process, an apparatus and a system for treating petroleum coke to overcome the disadvantages of the prior art. The process, apparatus and system in accordance with the present disclosure can achieve continuous production, and have advantages of high activation efficiency and stable properties of the obtained carbon material products.

In the first aspect, provided in the present disclosure is a process for treating petroleum coke, comprising the steps of:
(1) adding a feed of petroleum coke and an activator into a first reactor and subjecting to a first treatment under anon-reactive atmosphere, to obtain a first gas phase material and a first solid phase material;
(2) adding the first solid phase material and the first gas phase material obtained in step (1) into a second reactor and subjecting to a second heat treatment, to obtain a second gas phase material and a second solid phase material;
(3) subjecting the second solid phase material obtained in step (2) to cooling, mixing with water and liquid-solid separation, to obtain a first liquid phase material and a third solid phase material, wherein the third solid phase material is subjected to further washing and drying to obtain a porous carbon material.
   Preferably, the process for treating petroleum coke further comprises the step of:
(4) contacting and reacting the first liquid phase material obtained in step (3) with a precipitant, wherein the reaction effluent is subjected to liquid-solid separation to obtain a second liquid phase material and a fourth solid phase material, and wherein the fourth solid phase material is dried, calcined and then recycled as the precipitant.

Further preferably, the process for treating petroleum coke further comprises the step of:
(5) subjecting the second liquid phase material obtained in step (4) to evaporation-crystallization to obtain a third gas phase material and a fifth solid phase material, wherein the fifth solid phase material is reused as the activator.

In the process for treating petroleum coke in accordance with the present disclosure, the feed of petroleum coke may be preferably subjected to drying and pulverizing before being added together with the activator into the first reactor in step (1). The drying may be operated according to well-known methods in the art. Generally, the dried feed of petroleum coke may have a water content of not more than 2wt%, preferably not more than 1wt%. The pulverizing may be operated according to well-known methods in the art. The pulverized feed of petroleum coke may have a particle size of not greater than 200 µm, preferably not greater than 150 µm.

In the process for treating petroleum coke in accordance with the present disclosure, the first treatment in step (1) may be operated at a temperature of 200-500 °C, preferably 350-450 °C.

In the process for treating petroleum coke in accordance with the present disclosure, the activator and the feed of petroleum coke in step (1) may be in a mass ratio of 0.5:1-8:1, preferably 1:1-5:1.

In the process for treating petroleum coke in accordance with the present disclosure, the activator in step (1) may be an alkali metal compound, preferably one or more selected from the group consisting of potassium hydroxide, sodium hydroxide, potassium carbonate and sodium carbonate, more preferably a mixture of one or two of potassium hydroxide and sodium hydroxide with one or two of potassium carbonate and sodium carbonate, and most preferably a mixture of potassium hydroxide and potassium carbonate. In one variant, the mixture of potassium hydroxide and potassium carbonate may comprise potassium carbonate in a content of 1-30wt%, preferably 5-20wt%.

In the process for treating petroleum coke in accordance with the present disclosure, the non-reactive atmosphere in step (1) may be one or more of nitrogen or inert gases, preferably nitrogen. The inert gases may be one or more of helium, neon, argon, krypton and xenon. When calculated based on the mass of the feed of petroleum coke, the non-reactive atmosphere may be fed in an amount of 100-2000L, preferably 500-1000L per kg of the feed of petroleum coke.

In the process for treating petroleum coke in accordance with the present disclosure, the first reactor in step (1) may be a rotary kiln reactor. The rotary kiln reactor may be in any common structure in the art. Those skilled persons may choose according to their needs. Furthermore, the rotation speed may be 0.1-2rpm, preferably 0.5-1rpm.

In the process for treating petroleum coke in accordance with the present disclosure, the second heat treatment in step (2) may be operated under conditions of: a pressure of 10-100Pa (gauge pressure), preferably 20-50Pa (gauge pressure); and a temperature of 700-1000 °C, preferably 800-950 °C. The second heat treatment may comprise high-temperature treating and cooling, wherein the high-temperature treating may comprise heating and keeping at a constant temperature. In the heating, it may last 30-300 minutes, preferably 60-180 minutes. In the keeping at the constant temperature, it may last 10-120 minutes, preferably 20-60 minutes. In the cooling, the material after the step of keeping at the constant temperature may be cooled to 300-500 °C. The heating may be operated by fuel gas or electric thermal radiation heating. The step of keeping at the constant temperature may be operated by using microwave heating. The cooling may be operated by water cooling or passing gases to cool the material after the step of keeping at the constant temperature.

In the process for treating petroleum coke in accordance with the present disclosure, the second gas phase material obtained in step (2) may be subjected to washing by water and then separating in a separation unit. The separation unit may adopt one separation measure or a combination of more separation measures to obtain different gas products, such as nitrogen, hydrogen and other gases (mainly comprising carbon monoxide, carbon dioxide, and hydrocarbon-containing gases such as methane and the like). The washing by water may be operated by using a Venturi scrubber. The separation unit may comprise one or more devices such as those for cryogenic separation, pressure swing adsorption, membrane separation, and the like. The nitrogen obtained after the separation may be recycled to the first reactor as the non-reactive atmosphere. The carbon dioxide and hydrogen obtained after the separation may be stored as products for other uses. The hydrocarbon-containing gases and carbon monoxide obtained after the separation may be used as fuel gas for the heating. Those skilled persons in the art can choose suitable devices for the separation unit based on the gas composition and actual needs, which is a necessary basic skill for them.

In the process for treating petroleum coke in accordance with the present disclosure, the second reactor is an annular furnace reactor, comprising: a housing, which forms a sealed annular space divided into an inlet/outlet zone, a high-temperature zone and a cooling zone, wherein the high-temperature zone may comprise a heating section and a constant temperature section; a rotary table, which is located inside the housing and arranged along the annular space thereof, wherein the rotary table is rotatable relative to the housing, so that the rotary table receives the first solid phase material in the inlet/outlet zone, carries the first solid phase material into the high-temperature zone and the cooling zones in sequence, and then discharges in the inlet/outlet zone; and baffles, which are located inside the housing and fixed thereon, and are spaced arranged above the rotary table, wherein the baffles comprise a plurality of guiding holes.

Further, in the above embodiments, the heating section may be operated by fuel gas or electric thermal radiation heating, and the heating section may be heated to a temperature of 700-1000 °C in a time of 30-300 minutes; and the constant temperature section may be operated by using microwave heating, at a constant temperature of 700-1000 °C for a time of 10-120 minutes.

Further, in the above embodiments, the heating section may be heated to a temperature of 800-950 °C in a time of 60-180 minutes; and the constant temperature section may be operated by using microwave heating, at a constant temperature of 800-950 °C for a time of 20-60 minutes.

Further, in the above embodiments, the material passed through the constant temperature zone may be cooled to 300-500 °C in the cooling zone. Preferably, the material passed through the constant temperature zone may be cooled to 300-500 °C in the cooling zone via water-cooling coils.

Further, in the above embodiments, the annular furnace reactor may further comprise one or more carrier gas inlets located in the inlet/outlet zone, and a gas outlet located in the high-temperature zone. There may be three carrier gas inlets, located at the starting point, middle point and ending point of the inlet/outlet zone, respectively.

Further, in the above embodiments, the baffles may be perpendicular to the surface of the rotary table, and the plurality of guiding holes may be arranged at the upper one-third to half of the baffles, and the guiding holes may be formed at an opening rate of 20% to 30%. The inlet side of the guiding holes may have a hole diameter greater than that of the outlet side. The guiding holes may be in a circular cone shape.

Further, in the above embodiments, the gas outlet may be located in the constant temperature section of the high-temperature zone.

Further, in the above embodiments, the inlet/outlet zone may comprise a feeder, which may comprise: one or more star valves for preventing gases in the housing from entering into the line for the first solid phase material, and a distributor for evenly distributing the first solid phase material entering into the housing onto the rotary table.

Further, in the above embodiments, the inlet/outlet zone may comprise a discharge system, which is fixed inside the housing and comprises: a spiral discharge device, which outputs a discharge material horizontally from its top; a conveyor belt, which is inclined, with one end located at the top of the spiral discharge device, to deliver the discharge material to the top of the spiral discharge device; and a lifting surface, which is inclined to pick up the second solid phase material located on the rotary table as the discharge material to the other end of the conveyor belt.

Further, in the above embodiments, the lifting surface may comprise: a primary lifting surface, which picks up particles of the second solid phase material with a particle size distribution greater than D10 to the conveyor belt, and a secondary lifting surface, which picks up particles of the second solid phase material with a particle size distribution lower than D10 to the conveyor belt.

Further, in the above embodiments, the lowest end of the primary lifting surface may be in a non-contact state with the surface of the rotary table, and may be made of rigid materials and in a serrated shape. The lowest end of the secondary lifting surface may be in contact with the surface of the rotary table and made of flexible materials.

In the process for treating petroleum coke in accordance with the present disclosure, in step (3), the second solid phase material is cooled to 20-100 °C, preferably 50-80 °C, and then mixed with water, wherein water is in an amount of 2-10 times, preferably 3-5 times of the weight of the second solid phase material. The cooling may be operated in a slag cooler. The slag cooler may be any one commonly used in the art.

In the process for treating petroleum coke in accordance with the present disclosure, in step (3), the third solid phase material is subjected to further washing and drying to obtain a porous carbon material, preferably activated carbon. The washing may include washing with water and washing with acids. Preferably, the washing with water is operated until the filtrate is neutral. The washing with water may be operated in containers one by one, or on a belt. The washing with acids may be operated with acids which may be hydrochloric acid, sulfuric acid, or a mixture thereof. Usually, acids are used as an aqueous solution with a concentration of 1-10wt%. The drying may be operated at a temperature of 50-200 °C, preferably 80-160 °C. The drying may be operated under an air atmosphere, a nitrogen atmosphere, or in vacuum.

In the process for treating petroleum coke in accordance with the present disclosure, in step (4), the precipitant may be calcium oxide and/or calcium hydroxide, preferably calcium hydroxide. Based on calcium ion, the precipitant may be added in an amount of 70-100%, preferably 70-95%, and further preferably 75-90% of the mass of carbonate ion in the first liquid phase material.

In the process for treating petroleum coke in accordance with the present disclosure, in step (4), the first liquid phase material and the precipitant may contact and react at a temperature of 60-95 °C, preferably 80-90 °C.

In the process for treating petroleum coke in accordance with the present disclosure, in step (4), the fourth solid phase material may be dried and calcined, and then recycled as the precipitant, wherein the drying may be operated at a temperature of 80-200 °C, preferably 120-160 °C, and the calcining may be operated at a temperature of 700-1200 °C, preferably 800-1000 °C.

In the process for treating petroleum coke in accordance with the present disclosure, in step (5), the third gas phase material obtained in the evaporation-crystallization may be condensed and recycled to step (3) to mix with the cooled second solid phase material.

In the second aspect of the present disclosure, provided is an apparatus for treating petroleum coke, which comprises an activation unit, wherein the activation unit is an annular furnace reactor, comprising: a housing, which forms a sealed annular space divided into an inlet/outlet zone, a high-temperature zone and a cooling zone, wherein the high-temperature zone may comprise a heating section and a constant temperature section; a rotary table, which is located inside the housing and arranged along the annular space thereof, wherein the rotary table is rotatable in relative to the housing, so that the rotary table receives a mixed feed material of petroleum coke and an activator in the inlet/outlet zone, carries the mixed feed material of petroleum coke and the activator into the high-temperature zone and the cooling zones in sequence, and then discharges in the inlet/outlet zone; and baffles, which are located inside the housing and fixed thereon, and are spaced arranged above the rotary table, wherein the baffles comprise a plurality of guiding holes.

In one variant, the apparatus for treating petroleum coke in accordance with the present disclosure is used to prepare porous carbon materials, such as activated carbon, from petroleum coke.

Further, in the above embodiments, the heating section may be heated to a temperature of 700-1000 °C in a time of 30-300 minutes; and the constant temperature section may be operated by using microwave heating, at a constant temperature of 700-1000 °C for a time of 10-120 minutes.

Further, in the above embodiments, the heating section may be heated to a temperature of 800-950 °C in a time of 60-180 minutes; and the constant temperature section may be operated by using microwave heating, at a constant temperature of 800-950 °C for a time of 20-60 minutes.

Further, in the above embodiments, the mixed feed passed through the constant temperature section may be cooled to 300-500 °C in the cooling zone. For example, the cooling in the cooling zone may be operated via water-cooling coils.

Further, in the above embodiments, the activation unit may further comprise one or more carrier gas inlets located in the inlet/outlet zone, and a gas outlet located in the high-temperature zone. There may be three carrier gas inlets, located at the starting point, middle point and ending point of the inlet/outlet zone, respectively.

Further, in the above embodiments, the baffles may be perpendicular to the surface of the rotary table, and the plurality of guiding holes may be arranged at the upper one-third to half of the baffles, and the guiding holes may be formed at an opening rate of 20% to 30%. The inlet side of the guiding holes may have a hole diameter greater than that of the outlet side. The guiding holes may be in a circular cone shape.

Further, in the above embodiments, the gas outlet may be located in the constant temperature section of the high-temperature zone.

Further, in the above embodiments, the inlet/outlet area may comprise a feeder, which may comprise: one or more star valves for preventing gases in the housing from entering into the line for the mixed feed material, and a distributor for distributing the mixed feed material entering into the housing onto the rotary table.

Further, in the above embodiments, the inlet/outlet zone may comprise a discharge system, which is fixed inside the housing and comprises: a spiral discharge device, which outputs a discharge material horizontally from its top; a conveyor belt, which is inclined, with one end located at the top of the spiral discharge device, to deliver the discharge material to the top of the spiral discharge device; and a lifting surface, which is inclined to pick up the discharge material located on the rotary table to the other end of the conveyor belt.

Further, in the above embodiments, the lifting surface may comprise: a primary lifting surface, which picks up particles of the material with a particle size distribution greater than D10 to the conveyor belt, and a secondary lifting surface, which picks up particles of the material with a particle size distribution lower than D10 to the conveyor belt.

Further, in the above embodiments, the lowest end of the primary lifting surface may be in a non-contact state with the surface of the rotary table, and may be made of rigid materials and in a serrated shape. The lowest end of the secondary lifting surface may be in contact with the surface of the rotary table and made of flexible materials.

Further, in the above embodiments, the apparatus in accordance with the present disclosure may further comprise an activator recovering unit, in which the discharge material is subjected to washing and separating, wherein the obtained liquid phase product is subjected to causticizing to recover the activator.

Further, in the above embodiments, the apparatus in accordance with the present disclosure may further comprise a pretreating unit, in which petroleum coke is mixed with the activator and pulverized, wherein the mixture is heated to 400-500 °C to pre-convert the mixture, which then is sent into the activation unit. The activator and petroleum coke may be mixed in a weight ratio of 1:1 to 5:1. The pretreating unit may be a rotary kiln for pre-converting the mixture.

Further, in the above embodiments, the apparatus in accordance with the present disclosure may further comprise a gas processing unit, in which the gas phase products discharged from the gas outlet of the activation unit are subjected to purifying and separating to output hydrogen gas.

Further, in the above embodiments, the apparatus in accordance with the present disclosure may further comprise a washing and refining unit, in which the discharge material from the activation unit is subjected to washing and separating, wherein the solid product after the separating is dried to obtain the activated carbon.

In the third aspect of the present disclosure, provided is a system for treating petroleum coke, comprising:
a first reactor for receiving and treating a feed of petroleum coke and an activator, to obtain a first gas phase material and a first solid phase material;
a second reactor for receiving and treating the first gas phase material and the first solid phase material, to obtain a second gas phase material and a second solid phase material;
a washing and separating unit for receiving and treating the second gas phase material from the second reactor to obtain nitrogen, hydrogen and other gases;
a cooling unit for receiving the second solid phase material from the second reactor and cooling it to obtain the cooled second solid phase material;
a dissolving and separating unit for receiving the cooled second solid phase material from the cooling unit and water, which are subject to mixing and liquid-solid separation to obtain a first liquid phase material and a third solid phase material;
a washing and drying unit for receiving the third solid phase material from the dissolving and separating unit and washing solution, wherein the third solid phase material is subjected to washing and drying to obtain activated carbon.

Preferably, the system for treating petroleum coke may further comprise:
a regenerating unit for receiving the first liquid phase material from the dissolving and separating unit and precipitant, wherein the first liquid phase material is subjected to treating and liquid-solid separation to obtain a second liquid phase material and a fourth solid phase material;
a drying and calcining unit for receiving and treating the fourth solid phase material from the regenerating unit, wherein the fourth solid phase material is subjected to drying and calcining to obtain the regenerated precipitant.

Further preferably, the system for treating petroleum coke may further comprise:
an evaporation-crystallization unit for receiving and treating the second liquid phase material from the regenerating unit, wherein the second liquid phase material is subjected to evaporation-crystallization to obtain a third gas phase material and a fifth solid phase material, wherein the fifth solid phase material is recycled as the activator.

The system for treating petroleum coke in accordance with the present disclosure, wherein
the first reactor comprises a feed inlet communicated with a feeding line for petroleum coke and a feeding line for activator;
the second reactor comprises a gas inlet communicated with a gas phase outlet of the first reactor via a first gas phase line, and a solid inlet communicated with a solid phase outlet of the first reactor via a first solid phase line;
the washing and separating unit comprises a feed inlet communicated with a gas phase outlet of the second reactor via a second gas phase line;
the cooling unit comprises a feed inlet communicated with a solid phase outlet of the second reactor via a second solid phase line;
the dissolving and separating unit comprises a feed inlet communicated with an outlet of the cooling unit via a third solid phase line;
the washing and drying unit comprises a feed inlet communicated with a solid phase outlet of the dissolving unit via a fourth solid phase line;
the regenerating unit comprises a feed inlet communicated with a liquid phase outlet of the dissolving and separating unit via a first liquid phase line;
the drying and calcining unit comprises a feed inlet communicated with a solid phase outlet of the regenerating unit via a fifth solid phase line;
the evaporation-crystallization unit comprises a feed inlet communicated with a liquid phase outlet of the regenerating unit via a second liquid phase line.

In the system for treating petroleum coke in accordance with the present disclosure, the feeding line for petroleum coke may be further communicated with a drying unit and a pulverizing unit, in which the feed of petroleum coke is subjected to drying and pulverizing first. The drying may be operated according to well-known methods in the art. Generally, the dried feed of petroleum coke may have a water content of not more than 2wt%, preferably not more than 1wt%. The pulverizing may be operated according to well-known methods in the art. The pulverized feed of petroleum coke may have a particle size of not greater than 200 µm, preferably not greater than 150 µm.

In the system for treating petroleum coke in accordance with the present disclosure, the first reactor may be a rotary kiln reactor. The rotary kiln reactor may be a reactor having any structure commonly used in the art. Those skilled persons may select suitable one according to their demands.

In the system for treating petroleum coke in accordance with the present disclosure, the washing and separating unit may comprise a washing unit and a separating unit, which are connected in series. The washing unit may comprise one or more washing equipment, preferably a Venturi scrubber for washing the second gas phase material. The second gas phase material after washing is sent into the separating unit for separation. After separation, nitrogen, hydrogen, carbon dioxide, hydrocarbon-containing gas and carbon monoxide are obtained. The separating unit may comprise one or more devices such as those for cryogenic separation, pressure swing adsorption, membrane separation, and the like. Those skilled persons in the art may select suitable devices for the separating unit based on the gas composition and actual needs, which is a basic skill for those skilled persons in the art.

In the system for treating petroleum coke in accordance with the present disclosure, the second reactor may be an annular furnace reactor, such as the annular furnace reactor mentioned above, which is not repeatedly described herein.

In the system for treating petroleum coke in accordance with the present disclosure, the cooling unit may comprise one or more cooling devices, preferably a slag cooler. The slag cooler may be one or more selected from the group consisting of a drum slag cooler, a vibration slag cooler, a water-cooled slag cooler and a disc slag cooler, preferably a drum slag cooler. The cooling unit is for further cooling the second solid phase material from the second reactor to 20-100 °C, preferably 50-80°C. The slag cooler may be a commercially available product in the art. The type of the same may be selected by those skilled persons in the art based on their demands. Such selecting is a basic skill for those skilled persons in the art.

In the system for treating petroleum coke in accordance with the present disclosure, the dissolving and separating unit may be a container with a stirring device, for receiving the cooled second solid phase material from the cooling unit and the washing water from the water feeding line. The two are subjected to mixing and liquid-solid separation to obtain the first liquid phase material and the third solid phase material. The amount of the washing water is generally 2-10 times, preferably 3-5 times of the weight of the second solid phase material. The system for treating petroleum coke in accordance with the present disclosure may comprise one or more dissolving and separating units, preferably two or more, and further preferably two. When there are two or more dissolving and separating units, they can be switched. The number of the units may be determined based on the amount of the second solid phase material. The dissolving and separating unit in accordance with the present disclosure may be operated intermittently. The liquid phase material generated during the evaporation-crystallization in the evaporation-crystallization unit may be used as the washing water.

In the system for treating petroleum coke in accordance with the present disclosure, the washing and drying unit may comprise a washing unit and a drying unit. The washing unit may include washing with water and washing with acids. Preferably, the washing with water is operated until the filtrate is neutral. The washing with water may be operated in containers one by one, or on a belt. The washing with acids may be operated with acids which may be hydrochloric acid, sulfuric acid or a mixture thereof. Usually, acids are used as an aqueous solution with a concentration of 1-10wt%. The drying may be operated at a temperature of 50-200°C, preferably 80-160°C. The drying may be operated under an air atmosphere, a nitrogen atmosphere or in vacuum.

In the system for treating petroleum coke in accordance with the present disclosure, the regenerating unit may be a heatable container made of alkali-resistant materials with a stirring device, preferably an autoclave.

In the system for treating petroleum coke in accordance with the present disclosure, the evaporation-crystallization unit may be one or more of an autoclave evaporator, a tubular thin film evaporator, a scraper vacuum evaporator, a centrifugal thin film evaporator and the like, preferably an autoclave evaporator.

Compared with the prior art, the method, apparatus and system for treating petroleum coke in accordance with the present disclosure have the following advantages.
1. It is applicable in continuously producing porous carbon materials from petroleum coke, which is advantageous for large-scale industrial production.
2. Used is an annular furnace reactor, wherein the rotary table rotates relative to the housing. When in use, the rotary table carries feed materials moving inside the housing of the annular furnace. During the feeding and moving, the rotary table is stationary relative to moving parts, which prevents the feed materials from being disturbed, ensuring uniform properties of the products. The annular furnace reactor may also avoid the problem of materials being adhered to the wall that commonly occurs in processes using rotary kilns and the problem of conveyor collapsing that usually occurs due to excessive length of tunnel kilns. Moreover, in the high-temperature zone of the annular furnace reactor, the heating section is heated by fuel gas or electric thermal radiation heating, and the constant temperature section is heated by using microwave heating. Heating by fuel gas or electric thermal radiation heating has the advantage of cost-effectiveness, and heat is transferred from the surface of the materials to the inside thereof. With microwave heating, heat is transferred from the inside of the materials to the outside thereof. Therefore, by combining the two, better heating effect is achieved in the high-temperature zone, while heating is more uniform, thereby avoiding the problem of uneven properties of products associated with the same. In addition, it is possible to configure the constant temperature section so that it is composed of a conventional constant temperature section and a microwave constant temperature section, wherein the conventional constant temperature section is still operated by fuel gas or electric thermal radiation heating, and the microwave constant temperature section is operated by using microwave heating. Such arrangement may avoid the increasing energy consumption and cost caused by using microwave heating in the whole constant temperature section. Moreover, the annular furnace reactor involves baffles above the rotary table, wherein guiding holes are formed on the baffles. Such design not only moves the high-temperature gas distilled from the heated feed materials out of the housing, reducing backmixing of the same, but also accumulates ashes generated during the activation at the baffles, effectively avoiding the accumulation of ashes at the gas outlet which may block lines.
3. It involves the step of regenerating of the activator. By recycling the activator, the amount of the activator used is reduced, which saves cost. At the same time, the versatile engineering resources such as carrier gas, washing water and the like are also recycled, which reduces emissions and meets the requirements of a green economy.

### Brief description of the drawings

Fig. 1 is a schematic view showing the flow of the method for treating petroleum coke in accordance with the present disclosure.
Fig.2 is a three-dimensional schematic view of the annular furnace reactor in accordance with the present disclosure (mainly illustrating the housing and the arrangements for the microwave heating).
Fig.3 is a top schematic view of the annular furnace reactor in accordance with the present disclosure.
Fig.4 is a cross-sectional schematic view of the annular furnace reactor in accordance with the present disclosure (mainly illustrating a partial cross-sectional view of the rotary table).
Fig.5 is a cross-sectional schematic view of the baffle in accordance with the present disclosure (illustrating the structure of the guiding holes on the baffle).
Fig.6 is a schematic view showing the structure of the discharge system in accordance with the present disclosure.
Fig.7is a schematic view showing the structure of the lowest end of the primary lifting surface in accordance with the present disclosure.

### Detailed description

The technique and advantages of the present invention will now be described with reference to example embodiments, without limiting the present invention thereto.

Unless otherwise clearly indicated, as used in the entire specification and claims, the term "comprise" or the equivalent terms such as "include" or "have" and the like shall be understood to include the stated elements or components, but do not preclude other elements or components.

In this specification, spatially or temporally relative terms, such as "under", "below", "lower", "on", "above", "upper" and the like may be used for ease of description to describe one element or feature's relationship to another element(s) or feature(s) as illustrated in the figures. It should be understood that spatially relative terms may be intended to encompass different orientations of the object in use or operation in addition to the orientation depicted in the figures. For example, if the object in the figure is overturned, the elements which are described as "under" or "below" another element(s) or feature(s) will be oriented as "above" the element(s) or feature(s). Therefore, the exemplary term "below" may encompass both orientations of under and above. The object can also have other orientations (rotation of 90 degrees or other orientations) and corresponding explanations should be given to the spatially relative terms used herein.

In this specification, terms "first," "second," and the like are used to distinguish two different elements or locations. In other words, in some embodiments, terms "first," "second," and the like may be interchanged with each other.

In this specification, all numerical values of parameters (e.g., of quantities or conditions) are to be understood as being modified in all instances by the term "about" whether or not "about" actually appears before the numerical value.

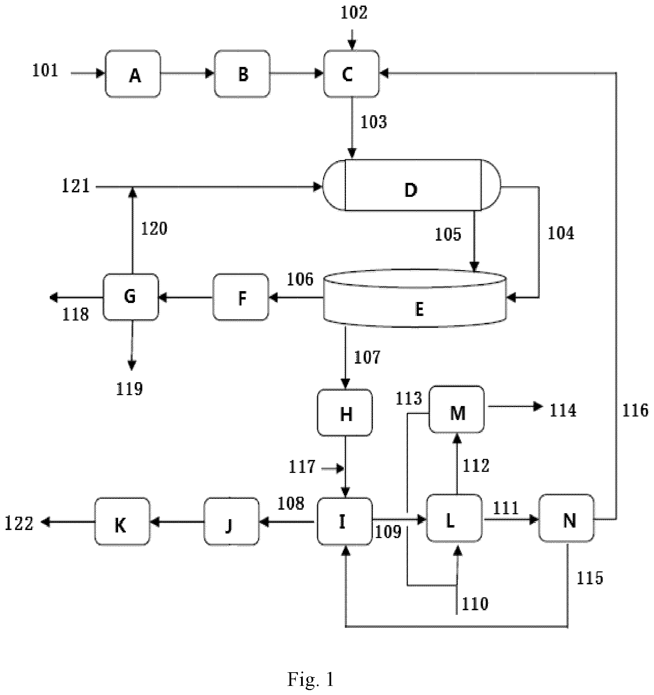

Fig. 1 shows an embodiment of the process for treating petroleum coke in accordance with the present disclosure, which comprises the steps of: subjecting a feed of petroleum coke101 to drying and pulverizing in a drying unit A and a pulverizing unit B. The feed of petroleum coke after drying and pulverizing is mixed with an activator 102 in a mixing unit C. The obtained mixture 103 is sent into a first reactor D and subjected to a first treatment in the presence of an inert atmosphere 121, to obtain a first gas phase material 104 and a first solid phase material 105. The obtained first solid phase material 105 and first gas phase material 104 are sent into a second reactor E and subjected to a second heat treatment, to obtain a second gas phase material 106 and a second solid phase material 107. The obtained second gas phase material 106 is subjected to treatment in a washing and separating unit G (e.g., washing in a gas scrubber and separating in a separating unit) to obtain nitrogen 120, hydrogen 118 and other gases 119 (wherein the other gases mainly comprise carbon monoxide, carbon dioxide, hydrocarbon gases such as methane, and the like). The separating unit may use one or more of the devices for cryogenic separation, pressure swing adsorption, membrane separation and the like. The hydrocarbon containing gas and carbon monoxide obtained after the separating may be used as fuel for the heating in the second reactor. Nitrogen obtained after the separating may be recycled to the first reactor as the non-reactive atmosphere. Hydrogen obtained after the separating may be stored as a product. The obtained second solid phase material 107 is subjected to cooling in a cooling unit H (e.g., a slag cooler). The cooled second solid phase material is sent into a dissolving and separating unit I and is subjected to mixing with water and liquid-solid separation to obtain a first liquid phase material 109 and a third solid phase material 108. The third solid phase material 108 is sent into a washing and drying unit and is subjected to washing with water and washing with acids in a washing unit J and drying in a drying unit K, to obtain a porous carbon material product (e.g., activated carbon) 122. The obtained first liquid phase material 109, together with a precipitant 110, is sent into a regenerating unit L for contacting and reacting, wherein the reaction effluent is subjected to liquid-solid separation to obtain a second liquid phase material 111 and a fourth solid phase material 112, and wherein the fourth solid phase material 112 is dried and calcined in a drying and calcining unit to obtain regenerated precipitant 113 and carbon dioxide 114. The obtained regenerated precipitant 113 may be recycled and reused in the regenerating unit L. The obtained second liquid phase material 111 is sent into an evaporation-crystallization unit and subjected to evaporation-crystallization, to obtain a third gas phase material 115 and a fifth solid phase material 116. The obtained fifth solid phase material 116 is recycled and reused in the mixing unit C as regenerated activator. The obtained third gas phase material 115 is condensed and then recycled and reused in the dissolving and separating unit I.

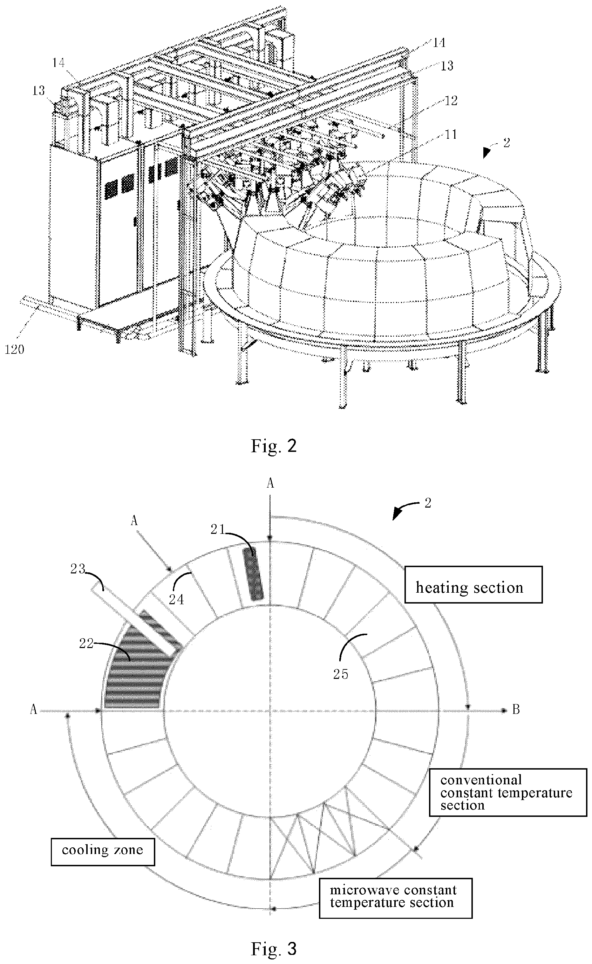

As shown in Fig. 2 to 4, it is the annular furnace reactor in accordance with the present disclosure that functions as the second reactor E. The annular furnace reactor comprises: an annular housing 2, which forms a sealed annular space divided into an inlet/outlet zone (the upper left part of the ring in Fig. 3), a high-temperature zone (the right half of the ring in Fig. 3), and a cooling zone (the lower left part of the ring in Fig. 3). In the annular furnace reactor, the pressure may be set at 10-100Pa (gauge pressure), preferably 20-50 Pa (gauge pressure). The annular furnace reactor further comprises a rotary table 25. The rotary table 25 is located inside the annular housing 2 and arranged along the annular space thereof. The rotary table 25 may be driven by the transmission mechanism 250 at its bottom, which makes the rotary table 25 rotate relative to the housing 2. The feeder 21 in the inlet/outlet zone distributes the first solid phase material on the rotary table 25. While rotating, the rotary table 25 receives and carries the first solid phase material sequentially into the high-temperature zone (in which the first solid phase material is subjected to activating at high temperature) and the cooling zone (in which the material is cooled), and then into the inlet/outlet zone (in which the cooled material is discharged from the discharge system). There is not any specific limitation on the material for the rotary table. However, rigid materials are preferred. The rotary table may have a larger thickness and the bottom thereof may be reinforced with ribs, to further avoid the problem of structural collapsing of the flexible conveyor.

In the annular furnace reactor in accordance with the present disclosure, the rotary table rotates relative to the housing. When in use, the rotary table carries feed materials to move inside the housing of the annular furnace. During the feeding and moving, the rotary table is stationary relative to moving parts, which prevents the feed materials from being disturbed, ensuring uniform properties of the products. The annular furnace reactor may also avoid the problem of materials being adhered to the wall that commonly occurs in processes using rotary kilns and the problem of structural collapsing of conveyor that usually occurs due to excessive length of tunnel kilns.

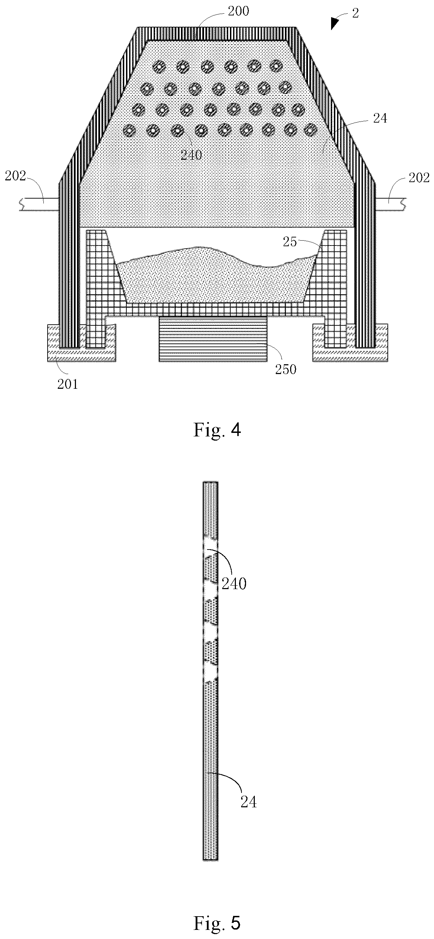

Further, as shown in Fig. 3, the high temperature zone is divided into a heating section and a constant temperature section. The heating section may be heated by fuel gas or electric thermal radiation heating, to heat the first solid phase material to 700-1000 °C, preferably 800-950 °C with a time in the heating section of 30 to 300 minutes, preferably 60 to 180 minutes. The constant temperature section may be heated completely by using microwave heating. Alternatively, as shown in Fig. 3, the constant temperature section is composed of a conventional constant temperature section and a microwave constant temperature section, wherein the conventional constant temperature section is still operated by fuel gas or electric thermal radiation heating, and the microwave constant temperature section is operated by using microwave heating. The heating by fuel gas or electric thermal radiation heating may be operated by a thermal radiation tube 202, wherein the thermal radiation tube 202 runs through the housing 200 (referring to Fig. 4). The constant temperature section keeps the material at a temperature of 700-1000 °C, preferably 800-950°C for a time in the constant temperature section of 10 to 120 minutes, preferably 20 to 60 minutes. The time in the heating section and the time in the constant temperature section may be controlled by factors such as the structural dimensions of the annular housing 2, area of each zone and section, the rotation speed of the rotary table 25 and the like. In the high-temperature zone of the annular furnace reactor, the heating section is heated by fuel gas or electric thermal radiation heating, and the constant temperature section is heated by using microwave heating. Heating by fuel gas or electric thermal radiation heating has the advantage of cost-effectiveness, and heat is transferred from the surface of the materials to the inside thereof. With microwave heating, heat is transferred from the inside of the materials to the outside thereof. Therefore, by combining the two, more effective and uniform heating is achieved in the high-temperature zone, thereby avoiding the problem of uneven properties of products associated with the same. In addition, it is possible to configure the constant temperature section so that it is composed of a conventional constant temperature section and a microwave constant temperature section, wherein the conventional constant temperature section is still operated by fuel gas or electric thermal radiation heating, and the microwave constant temperature section is operated by using microwave heating. Such arrangement may avoid the increasing energy consumption and cost caused by using microwave heating in the whole constant temperature section.

After high-temperature activation, the materials may be sent into the cooling zone and subjected to cooling, so that the materials passed through the constant temperature section may be cooled to 300-500°C. In one variant, the materials passed through the constant temperature section may be cooled to 300-500 °C in the cooling zone via water-cooling coils.

Further, as shown in Fig. 2, microwaves for heating are provided through a microwave source 11. The cooling water is transported into the cooling coils 12 through the cooling water inlet/outlet main pipe 120, and in turn into the cooling zone to cool the high-temperature activated materials. The microwave heating is powered and controlled through weak current cable tray 13 and strong current cable tray 14.

Nitrogen is usually used as a carrier gas during the activation of petroleum coke. Therefore, the annular furnace reactor further comprises one or more carrier gas inlets and gas outlets. In order to ensure the flux and uniformity of carrier gas, the one or more carrier gas inlets may be located in the inlet/outlet zone. Preferably and nonexclusively, there are three carrier gas inlets, located at the starting point, middle point and end point of the inlet/outlet zone, respectively. The gas outlet may be located in the constant temperature section of the high-temperature zone.

Further, as shown in Fig. 4 and 5, a plurality of guiding holes 240 are provided on the baffle 24, in order to ensure that the carrier gas A and the high-temperature gas distilled during the activation can pass through the baffle 24 arranged at intervals (preferably evenly spaced) above the rotary table 25 (not in contact with the rotary table 25), which are regarded as the second gas phase material finally discharged from the gas outlet out of the housing (i.e. the gas B in Fig. 3). Preferably and nonexclusively, the baffle 24 may be arranged perpendicular to the surface of the rotary table 25, the plurality of guiding holes 240 may be arranged at the upper one-third to half of the baffles, and the guiding holes 240 may be formed at an opening rate of 20% to 30%. As the feed materials on the rotary table 25 are heated, high-temperature gases are distilled off and concentrate towards the upper part of the annular housing. In order to effectively remove those high-temperature gases from the housing to reduce backmixing and thereby the adverse effects on the conversion, guiding holes are opened in the upper part of the baffle 24, thereby forming a circulating environment where cold carrier gas flows below the baffle 24 and the generated high-temperature gases move out of the upper part of the baffle 24. During the high-temperature activation of the first solid phase material, fine ashes are generated. Fine ashes are carried and moved by the high-temperature gases. To avoid the accumulation of those fine ashes at the gas outlet, which may block lines, the changes in flow rate of the gases at the guiding hole 240 are used to settle those fine ashes inside the baffle 24 and move them out of the annular furnace reactor with solid materials. Further, the inlet side of the guiding holes 240 may have a hole diameter greater than that of the outlet side. In a variant, the hole diameter of the outlet side may be set to 40-60% of that of the inlet side. In a variant, the guiding holes may be in a circular cone shape or other configurations similar to a circular cone shape.

Further, as shown in Fig. 4, at the bottom of the housing 200 of the annular furnace reactor, provided is a sealing layer 201, which isolates the housing 200 from the base (not shown), forming a sealed space. The rotary table 25 is within this sealed space and rotates relative to the housing 200 by the driving of the transmission mechanism 250. As shown in Fig. 3, the first solid phase material is fed to and distributed on the rotary table 25 through the feeder 21. The first solid phase material is carried by the rotary table 25 to move sequentially into the heating section, the conventional constant temperature section, the microwave constant temperature section and the cooling section, and finally out of the annular housing 2 through the discharge system 22.

Further, as shown in Fig.3, a feeder 21 is arranged in the inlet/outlet zone. The feeder 21 may include a star valve and a distributor (not shown in the figure). One or more star valves may be used. The star valve may prevent the gases in the housing 2 from entering into the line for the first solid phase material. The distributor is used to distribute the first solid phase material entering into the housing onto the rotary table 25.

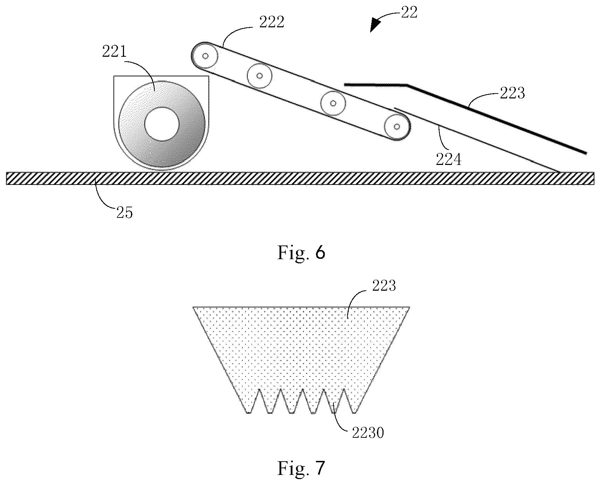

Further, as shown in Fig.3, a discharge system 22 is also arranged in the inlet/outlet zone. The discharge system 22 is fixed inside the housing 2. As shown in Fig. 6 and 7, the discharge system 22 may comprise a spiral discharge device 221, a conveyor belt 222 and a lifting surface. The lifting surface may comprise a primary lifting surface 223 and a secondary lifting surface 224. The two lifting surfaces are slightly inclined relative to the surface of the rotary table. The primary lifting surface 223 may pick up the particles of materials with a particle size distribution greater than D10 to the conveyor belt 222, and the secondary lifting surface 224 may pick up the particles of materials with a particle size distribution lower than D10to the conveyor belt 222. The materials after activated at high temperature and cooled (the second solid phase material) may have a certain viscosity and adhere to the surface of the rotary table 25. Therefore, the lowest end of the primary lifting surface 223 may be made of rigid materials and in a serrated shape (such as the serrated structure 2230 shown in Fig. 7) to effectively separate the particles of materials from the surface of the rotary table and pick them up. In order not to damage the surface of rotary table 25, the lowest end of primary lifting surface 223 is not in contact with the surface of rotary table 25, with the distance between it and the surface of rotary table 25 being the particle size distribution of D10. In this way, the rotary table can be protected and the particles of materials with a particle size distribution greater than D10 can be picked up. The lowest end of the secondary lifting surface 224 is in contact with the surface of the rotary table 25. In order to protect the surface of the rotary table, the lowest end of the secondary lifting surface 224 may be made of flexible materials. The particles of materials which are leaked from the lowest end of the primary lifting surface 223 (i.e. the particles of materials with a particle size distribution lower than D10) can be picked up with the secondary lifting surface 224. The conveyor belt 222 is also inclined. As the rotary table 25 moves, the two lifting surfaces continuously pick up the particles of materials, which gradually pile up and are transported to the lower end of conveyor belt 222, and then are transported to the upper end of the conveyor belt and fall into the spiral discharge device 221. The spiral discharge device 221 outputs the discharge material horizontally from its top. As a result, the particles of materials are transferred outside of the annular housing 2 through the material conveyor 23.

The apparatus for treating petroleum coke in accordance with the present disclosure may further comprise a washing and refining unit, in which the discharge material from the activation unit is subjected to washing and separating, wherein the solid phase product after the separating is dried to obtain porous carbon materials (such as activated carbon).

Due to the fact that a large amount of activator is used in the activation of petroleum coke, the apparatus in accordance with the present disclosure may further comprise an activator recovering unit to realize the regeneration and recovery of activator, so as to effectively reduce the consumption of activator and save costs. In particular, in the activator recovering unit, the liquid phase product obtained after the washing and separating of the discharge material in the washing and refining unit is subjected to a causticization reaction with calcium hydroxide, so as to recover the activator (e.g., potassium hydroxide) for reusing. In one variant, the purified water generated in the causticization reaction may be recycled to the washing and refining unit.

Further, the apparatus in accordance with the present disclosure may further comprise a gas processing unit, in which the gas phase products discharged from the gas outlet of the activation unit are subjected to purifying and separating to output hydrogen gas, with the remaining gas being discharged through torch combustion.

By introducing the activator recovering unit and the gas processing unit for recovering activators and carrier gases, the apparatus in accordance with the present disclosure reduces the consumption of activators, saves costs, reduces emissions, and meets the requirements of a green economy.

### Examples

In Examples in accordance with the present disclosure and Comparative Examples, the feed of petroleum coke had the properties as shown in Table 1. The second reactor in Examples in accordance with the present disclosure was the annular furnace reactor as described above.

**Table 1 properties of the feed of petroleum coke**

| Test items | | petroleum coke |
|---|---|---|
| Industrial analysis, wt% | Water ( Mₐᵣ ) | 3.8 |
| | Ashes ( Aₐᵣ ) | 0.48 |
| | Volatiles ( Vₐᵣ ) | 10.05 |
| | Fixed carbon ( FCₐᵣ ) | 85.67 |
| elemental analysis, wt% | Carbon (C_{daf}) | 87.26 |
| | Hydrogen (H_{daf}) | 3.27 |
| | Sulfur (S_{daf}) | 7.56 |
| | Nitrogen (N_{daf}) | 1.4 |
| | Oxygen (O_{daf}) | 0.5 |
| Content of sulfur in different types, wt% | Sulfur in iron sulfide ( SP_{ad} ) | 0.04 |
| | Sulfur in sulfates ( SS_{ad} ) | 0.02 |
| | Organic sulfur ( SO_{ad} ) | 7.44 |

### Example 1

This example followed the flow shown in Fig. 1. The feed of petroleum coke was dried in a drying unit (a drying chamber with hot air circulation) to reduce the water content to 0.77wt%. The dried feed of petroleum coke was pulverized in a pulverizing unit by: first pulverizing the feed with a jaw crusher to a particle size of less than 2mm, and then pulverizing the feed with an ultrafine crusher to a particle size of less than 100 µm. The pulverized feed of petroleum coke and an activator (a mixture of potassium hydroxide and potassium carbonate, wherein potassium carbonate was in an amount of 10wt%) were added to a mixing unit (a spiral belt mixer) for mixing. The mixture was sent into a storage bin with nitrogen protection, and then into the first reactor (a rotary kiln reactor). At the same time, fresh nitrogen gas was introduced into the first reactor at an input amount of 500L/kg based on the added feed of petroleum coke. The rotary kiln reactor was operated at a temperature of 450°C, a rotation speed of 1 rpm, and a time for the material staying in the rotary kiln reactor of 1 hour. The effluent materials from the rotary kiln reactor were sent into a second reactor (an annular furnace reactor). The annular furnace reactor was operated under conditions of: the constant temperature section being heated completely by using microwave heating, the temperature in the constant temperature section being 900°C, the ratio of the length of the heating section to that of the constant temperature section being 4:1, the time for staying in the heating section being 120 minutes, the time for staying in the constant temperature section being 30 minutes, and the pressure in the heating zone being 30Pa (gauge pressure). After passing through the constant temperature section, the materials were sent into the cooling section and finally out of the annular furnace reactor. The solid phase materials from the annular furnace reactor were sent into a cooling unit (a slag cooler) for cooling. The solid phase materials from the cooling unit and fresh water were sent into a dissolving and separating unit in a mass ratio of 1:4 for mixing and stirring for 1 hour, and then subjected to solid-liquid separation. The solid materials obtained from the dissolving and separating unit were sent into a washing and drying unit, in which they were subjected to washing with water to neutral, washing with a 3wt% solution of hydrochloric acid, further washing with water to neutral, and then solid-liquid separation. The obtained solid materials were sent into a drying device and subjected to drying at 120°C for 8 hours, to obtain a product of activated carbon. The gas phase materials discharged from the second reactor were sent into a washing and separation unit, in which they were washed with water and further separated via a pressure swing adsorption device into hydrogen gas, combustible gas and nitrogen gas, wherein the combustible gas was used as the fuel gas for the fuel gas thermal radiation heating or for torch combustion, and nitrogen gas was recycled to the first reactor. The effluent liquids from the dissolving and separating unit were sent into a regenerating unit. At the same time, calcium hydroxide was added as a precipitant in an amount of 80% of the mass of carbonate ions in the effluent liquids. They were stirred and mixed at 80°C for 2h, cooled, and then subjected to solid-liquid separation. The solid materials discharged from the regenerating unit were sent into a drying and calcining unit, wherein the solid materials obtained after calcining at 850°C for 4 hours were recycled to the regenerating unit for being reused as the precipitant. The processing conditions and the properties of the products were showed in Table 2.

### Example 2

Example 1 was repeated except that the first reactor was operated at a temperature of 350°C, a rotation speed of 0.5 rpm, and a time for the material staying therein of 2 hours; and the second reactor (the annular furnace reactor) was operated under conditions of: the ratio of the length of the heating section to that of the constant temperature section being 9: 1, the time for staying in the heating section being 180 minutes, the time for staying in the constant temperature section being 20 minutes, and the pressure in the heating zone being 20Pa (gauge pressure). The processing conditions and the properties of the products were showed in Table 2.

### Example 3

Example 1 was repeated except that the feed of petroleum coke and an activator (a mixture of potassium hydroxide and potassium carbonate, wherein potassium carbonate was in an amount of 20wt%) were added in a ratio of 1:5. The precipitant was added into the regenerating unit in an amount of 75% of the mass of carbonate ions in the effluent liquids from the dissolving and separating unit. The first reactor was operated at a temperature of 400°C, a rotation speed of 1 rpm, and a time for the material staying therein of 1 hour. The second reactor (the annular furnace reactor) was operated under conditions of: the temperature in the constant temperature section being 800°C, the ratio of the length of the heating section to that of the constant temperature section being 2:1, the time for staying in the heating section being 120 minutes, the time for staying in the constant temperature section being 60 minutes, and the pressure in the heating zone being 50Pa (gauge pressure). The processing conditions and the properties of the products were showed in Table 2.

### Example 4

Example 1 was repeated except that the feed of petroleum coke and an activator (a mixture of potassium hydroxide and potassium carbonate, wherein potassium carbonate was in an amount of 5wt%) were added in a ratio of 1:1. The precipitant was added into the regenerating unit in an amount of 90% of the mass of carbonate ions in the effluent liquids from the dissolving and separating unit. The first reactor was operated at a temperature of 450°C, a rotation speed of 1 rpm, and a time for the material staying therein of 1 hour. The second reactor (the annular furnace reactor) was operated under conditions of: the temperature in the constant temperature section being 950°C, the ratio of the length of the heating section to that of the constant temperature section being 3:1, the time for staying in the heating section being 60 minutes, the time for staying in the constant temperature section being 20 minutes, and the pressure in the heating zone being 40Pa (gauge pressure). The processing conditions and the properties of the products were showed in Table 2.

### Comparative Example 1

Example 1 was repeated except that the second reactor (the annular furnace reactor) was operated under conditions of: the constant temperature section being heated by a thermal radiation tube rather than by using microwave heating, the temperature in the constant temperature section being 900°C, the ratio of the length of the heating section to that of the constant temperature section being 4:1, the time for staying in the heating section being 120 minutes, the time for staying in the constant temperature section being 30 minutes, and the pressure in the heating zone being 30Pa (gauge pressure). The processing conditions and the properties of the products were showed in Table 2.

**Table 2 processing conditions and properties of the products**

| | Ex. 1 | Ex. 2 | Ex.3 | Ex. 4 | CE. 1 |
|---|---|---|---|---|---|
| the ratio of activator to petroleum coke | 3 | 3 | 5 | 1 | 3 |
| the amount of potassium carbonate in the activator | 10wt% | 10wt% | 20wt% | 5wt% | 10wt% |

| conditions for the first heating treatment | | | | | |
|---|---|---|---|---|---|
| temperature, °C | 450 | 350 | 400 | 450 | 450 |
| time, h | 1 | 2 | 1 | 1 | 1 |

| conditions for the second heating treatment | | | | | |
|---|---|---|---|---|---|
| | | | | | |
| time for staying in the heating section, min | 120 | 180 | 120 | 60 | 120 |
| temperature in the constant temperature section, °C | 900 | 900 | 800 | 950 | 900 |
| time for staying in the constant temperature section, min | 30 | 20 | 60 | 20 | 30 |
| pressure (gauge pressure), Pa | 30 Pa | 20 | 50 | 40 | 30 |

| the properties of the products | | | | | |
|---|---|---|---|---|---|
| specific surface area, m²/g | 2758 | 2566 | 2319 | 2637 | 2159 |
| pore volume, cm³/g | 1.57 | 1.41 | 1.20 | 1.26 | 1.08 |

### Example 5

Example 1 and Comparative Example 1 were repeated for 10 times respectively. The properties of the products obtained in each time were showed in Table 3.

**Table 3 properties of the products**

| | | 2 | 3 | 4 | 5 | 6 | |
|---|---|---|---|---|---|---|---|
| Ex. 1 | specific surface area, m²/g | 2734 | 2809 | 2777 | 2739 | 2705 | |
| | pore volume, cm³/g | 1.55 | 1.57 | 1.61 | 1.56 | 1.53 | |
| CE. 1 | specific surface area, m²/g | 2268 | 1893 | 2029 | 1977 | 2059 | |
| | pore volume, cm³/g | 1.02 | 1 | 1.05 | 1.01 | 1.08 | |

| | | 7 | 8 | 9 | 10 | average | standard deviation |
|---|---|---|---|---|---|---|---|
| Ex.1 | specific surface area, m²/g | 2781 | 2811 | 2749 | 2695 | 2756 | 37 |
| | pore volume, cm³/g | 1.58 | 1.62 | 1.59 | 1.51 | 1.57 | 0.03 |
| CE. 1 | specific surface area, m²/g | 2289 | 1944 | 1998 | 2409 | 2103 | 162 |
| | pore volume, cm³/g | 1.14 | 1.01 | 1.02 | 1.17 | 1.06 | 0.06 |

As shown from the data in the above table, the products obtained in repeating Example 1 in accordance with the present disclosure for 10 times showed a standard deviation of 37m²/g for specific surface area and a standard deviation of 0.03cm³/g for pore volume, indicating that there was not significant change in properties. In contrast, the products obtained in repeating Comparative Example 1 for 10 times showed a standard deviation of 162m²/g for specific surface area and a standard deviation of 0.06 cm³/g for pore volume, indicating that there was significant change in properties.

## Claims

1. An annular furnace reactor, comprising:
a housing, which forms a sealed annular space divided into an inlet/outlet zone, a high-temperature zone and a cooling zone, wherein the high-temperature zone comprises a heating section and a constant temperature section;
a rotary table, which is located inside the housing and arranged along the annular space thereof, wherein the rotary table rotates relative to the housing, so that the rotary table receives a feed material which is a mixture of petroleum coke and an activator in the inlet/outlet zone, carries the mixed feed material of petroleum coke and the activator into the high-temperature zone and the cooling zone in sequence, and then discharges in the inlet/outlet zone; and
baffles, which are located inside the housing and fixed thereon, and are spaced arranged above the rotary table, wherein the baffles comprise a plurality of guiding holes.

2. The annular furnace reactor of claim 1, wherein the heating section is operated by fuel gas or electric thermal radiation heating, and the heating section is heated for a time of 30-300 minutes, preferably 60-180 minutes; and
the constant temperature section is operated by using microwave heating, at a constant temperature of 700-1000 °C, preferably 800-950°C for a time of 10-120 minutes, preferably20-60 minutes.

3. The annular furnace reactor of claim 1, further comprising:
one or more carrier gas inlets located in the inlet/outlet zone, preferably, three carrier gas inlets located at the starting point, middle point and ending point of the inlet/outlet zone, respectively; and
a gas outlet located in the high-temperature zone, preferably in the constant temperature section of the high-temperature zone.

4. The annular furnace reactor of claim 1, wherein the baffles are arranged perpendicular to the surface of the rotary table, the plurality of guiding holes are arranged at the upper one-third to half of the baffles, the guiding holes are formed at an opening rate of 20% to 30%, and the inlet side of the guiding holes has a hole diameter greater than that of the outlet side;
preferably, the guiding holes are in a circular cone shape.

5. The annular furnace reactor of claim 1, wherein the inlet/outlet zone comprises a discharge system, which is fixed inside the housing and comprises:
a spiral discharge device, which outputs a discharge material horizontally from its top;
a conveyor belt, which is inclined, with one end located at the top of the spiral discharge device, to deliver the discharge material to the top of the spiral discharge device; and
a lifting surface, which is inclined to pick up the discharge material on the rotary table to the other end of the conveyor belt.

6. The annular furnace reactor of claim 5, wherein
the lifting surface comprises:
a primary lifting surface, which picks up particles of the materials with a particle size distribution greater than D10 to the conveyor belt, and
a secondary lifting surface, which picks up particles of the materials with a particle size distribution lower than D10 to the conveyor belt;
preferably, the lowest end of the primary lifting surface is in a non-contact state with the surface of the rotary table, and is made of rigid materials and in a serrated shape, and
the lowest end of the secondary lifting surface is in contact with the surface of the rotary table and is made of flexible materials.

7. An apparatus for treating petroleum coke, comprising the annular furnace reactor of any one of claims 1-6 as an activation unit.

8. A process for treating petroleum coke, comprising the steps of:
(1) adding a feed of petroleum coke and an activator into a first reactor and subjecting to a first treatment under anon-reactive atmosphere, to obtain a first gas phase material and a first solid phase material;
(2) adding the first solid phase material and the first gas phase material obtained in step (1) into a second reactor and subjecting to a second heat treatment, to obtain a second gas phase material and a second solid phase material;
(3) subjecting the second solid phase material obtained in step (2) to cooling, mixing with water and liquid-solid separation, to obtain a first liquid phase material and a third solid phase material, wherein the third solid phase material is subjected to further washing and drying to obtain a porous carbon material;
optionally, (4) contacting and reacting the first liquid phase material obtained in step (3) with a precipitant, wherein the reaction effluent is subjected to liquid-solid separation to obtain a second liquid phase material and a fourth solid phase material, and wherein the fourth solid phase material is dried, calcined and then recycled as the precipitant; and
optionally, (5) subjecting the second liquid phase material obtained in step (4) to evaporation-crystallization to obtain a third gas phase material and a fifth solid phase material, wherein the fifth solid phase material is reused as the activator.

9. The process for treating petroleum coke of claim 8, further comprising the step of:
subjecting the feed of petroleum coke to drying and pulverizing in advance, wherein the dried feed of petroleum coke has a water content of not more than 2wt%, preferably not more than 1wt%, and the pulverized feed of petroleum coke has a particle size of not greater than 200 µm, preferably not greater than 150 µm.

10. The process for treating petroleum coke of claim 8, wherein the first treatment in step (1) is operated at a temperature of 200-500°C, preferably 350-450 °C, and
the activator and the feed of petroleum coke in step (1) are in a mass ratio of 0.5:1-8:1, preferably 1:1-5:1.

11. The process for treating petroleum coke of claim 8, wherein the activator in step (1) is an alkali metal compound which is one or more selected from the group consisting of potassium hydroxide, sodium hydroxide, potassium carbonate and sodium carbonate; preferably is a mixture of one or two of potassium hydroxide and sodium hydroxide with one or two of potassium carbonate and sodium carbonate; more preferably is a mixture of potassium hydroxide and potassium carbonate; and most preferably is a mixture of potassium hydroxide and potassium carbonate, wherein potassium carbonate is in a content of 1-30wt%, preferably 5-20wt%.

12. The process for treating petroleum coke of claim 8, wherein the second reactor is the annular furnace reactor of any one of claims 1-6.

13. A system for treating petroleum coke, comprising:
a first reactor for receiving and treating a feed of petroleum coke and an activator, to obtain a first gas phase material and a first solid phase material;
a second reactor for receiving and treating the first gas phase material and the first solid phase material, to obtain a second gas phase material and a second solid phase material;
a washing and separating unit for receiving and treating the second gas phase material from the second reactor to obtain nitrogen gas, hydrogen gas and other gases;
a cooling unit for receiving the second solid phase material from the second reactor and cooling it to obtain the cooled second solid phase material;
a dissolving and separating unit for receiving the cooled second solid phase material from the cooling unit and water, which are subjected to mixing and liquid-solid separation to obtain a first liquid phase material and a third solid phase material;
a washing and drying unit for receiving the third solid phase material from the dissolving and separating unit and washing solution, wherein the third solid phase material is subjected to washing and drying to obtain activated carbon.

14. The system for treating petroleum coke of claim 13, further comprising:
a regenerating unit for receiving the first liquid phase material from the dissolving and separating unit and precipitant, wherein the first liquid phase material is subjected to regeneration treatment and liquid-solid separation to obtain a second liquid phase material and a fourth solid phase material;
a drying and calcining unit for receiving and treating the fourth solid phase material from the regenerating unit, wherein the fourth solid phase material is subjected to drying and calcining to obtain the regenerated precipitant;
preferably, further comprising:
an evaporation-crystallization unit for receiving and treating the second liquid phase material from the regenerating unit, wherein the second liquid phase material is subjected to evaporation-crystallization to obtain a third gas phase material and a fifth solid phase material, wherein the fifth solid phase material is recycled as the activator.

15. The system for treating petroleum coke of claim 13, wherein the second reactor is the annular furnace reactor of any one of claims 1-6.
